# FASCICULE DE BREVET EUROPEEN

(11) **EP 1 558 489 B1**
(45) Date de publication et mention de la délivrance du brevet: **24.09.2008**
(21) Numéro de dépôt: 03782527.0
(22) Date de dépôt: 06.11.2003
(51) Int. Cl.: B62M 3/08

(54) **PEDALE DE CYCLE**
FAHRRADPEDAL
CYCLE PEDAL

(30) Priorité: 06.11.2002 FR 0213968
(43) Date de publication de la demande: 03.08.2005
(73) Titulaire: Garnier, Michel, 8399 Windhof (LU)
(72) Inventeur: Garnier, Michel, 8399 Windhof (LU)
(74) Mandataire: Honoré, Anne-Claire
(86) Numéro de dépôt international: PCT/FR2003/003326
(87) Numéro de publication internationale: WO 2004/044458

(56) Documents cités:
- DE-A- 19 636 358
- DE-C- 114 144
- FR-A- 2 436 707
- FR-A- 2 623 769
- US-A- 4 569 249

## Description

La présente invention concerne une pédale pour cycle destinée aussi bien aux vélos de route qu'aux vélos tout terrain dits VTT permettant d'améliorer le rendement du pédalage.

Dans le domaine du cyclisme, on connaît bien des pédales comportant un corps de pédale globalement rectangulaire monté libre en rotation autour d'un axe dit de pédale apte à être fixé à l'extrémité libre d'une manivelle de pédalier, ledit corps de pédale étant pourvu sur l'une de ses faces d'un cale-pied et d'une courroie de cale-pied. Ainsi, le cycliste positionne la pointe de sa chaussure sur le corps de la pédale dans le cale-pied pour transmettre la force du pied au corps de la pédale aussi bien par l'action d'appui du pied sur le corps de la pédale que par l'action de traction vers le haut lorsque le pied du cycliste remonte, de manière à procurer un pédalage continu. C'est le cas, par exemple, du brevet français FR 2.432.970 qui décrit un cale-pied de bicyclette comprenant d'une part un corps formé d'une plaque allongée recourbée vers l'avant dans sa partie médiane pour présenter une partie courbe, une première et une seconde partie d'extrémité prolongeant respectivement vers l'arrière les deux extrémités de la partie courbe de la plaque, et d'autre part une boucle positionnée à l'extrémité libre de la première partie d'extrémité et destinée à maintenir une courroie de cale-pied.

On connaît bien, par ailleurs, des pédales dites automatiques comprenant un élément d'accrochage solidaire de la semelle d'une chaussure de cycliste et apte à coopérer avec des élément d'enclenchements positionnés sur la face supérieure d'une pédale constituée, de la même manière que précédemment, d'un corps de pédale globalement rectangulaire monté libre en rotation autour d'un axe dit de pédale apte à être fixé à l'extrémité libre d'une manivelle de pédalier.

Ces pédales automatiques de cycle comportent habituellement un élément d'enclenchement avant constitué par une griffe formant butée pour enclencher l'extrémité avant mâle d'une cale solidaire de la semelle d'une chaussure de cycliste, et un élément d'enclenchement arrière mâle formé par une griffe articulée pour enclencher l'extrémité arrière mâle de la cale de la chaussure de cycliste. La griffe arrière est montée pivotante autour d'un axe transversal et elle est précontrainte par un moyen élastique vers une position d'enclenchement tout en étant déplaçable sous la pression de la cale de la chaussure de cycliste entre une position d'ouverture permettant l'insertion de l'extrémité arrière avant et mâle de la cale entre la griffe avant formant butée et respectivement la griffe articulée et une position fermée d'enclenchement dans laquelle la cale de la chaussure est solidarisée à la pédale. Le moyen élastique est constitué par un ressort hélicoïdal et la griffe arrière articulée peut être déplacé à force, contre l'effet de l'action du ressort, vers sa position ouverte pour dégager la plaque d'accrochage de sa prise entre les griffes. Le pivotement de la griffe arrière articulée est obtenu à l'aide de l'extrémité arrière mâle de la cale de la chaussure de cycliste qui coopère avec des parois verticales de la griffe arrière articulée formant cames qui, lors d'une rotation de la chaussure vers l'intérieur ou vers l'extérieur pour la solidarisation ou respectivement la désolidarisation de la chaussure sur la pédale, repousse la griffe vers l'arrière.

On connaît la demande de brevet FR 2.623.769 et la demande de brevet FR 2.436.707 qui décrivent des pédales de cycle. La demande de brevet FR 2.623.769 divulgue une pédale de cycle comportant un corps de pédale constitué d'une platine horizontale disposée de manière à ce que sa face supérieure, munie de moyens de blocage, s'étende sous l'axe de la pédale suivant une certaine distance et à ce que l'axe d'appui de la chaussure sur la platine s'étende devant l'axe de la pédale suivant une certaine distance. Ainsi, l'axe d'appui de la chaussure sur la platine décrit une courbe circulaire décalée par rapport à la courbe circulaire décrite par l'axe de la pédale monté sur la manivelle, ce qui favorise la réduction de l'effort de pédalage et donc une économie d'énergie du cycliste. Il apparaît toutefois que, lorsque la pédale se situe dans les quadrans postérieurs de la courbe circulaire décrite par l'axe d'appui, la chaussure se désolidarise légèrement de la platine, créant tout d'abord des sensations indésirables sous la chaussure. Ce phénomène autorise ensuite la rotation de la pédale par rapport à la manivelle, cette rotation provenant du moment dû à la traction que la chaussure exerce sur la pédale située dans lesdits quadrans postérieurs. Cela présente pour inconvénient diminuer l'effort que le cycliste peut réellement transmettre sur les manivelles, d'où une perte conséquente de l'énergie transmissible aux roues.

Ces inconvénients apparaissent également lorsque les pédales sont équipées de cales-pieds à sangle tels que décrits dans la demande de brevet FR 2.436.707, puisque celles-ci autorisent un soulèvement de la chaussure par rapport à la pédale lorsqu'elle se situe dans les quadrans postérieurs.

Tous ces dispositifs, bien que permettant une solidarisation de la chaussure de cycliste sur la pédale satisfaisante, ne permettent pas de transmettre efficacement l'énergie développée par le cycliste aux roues.

L'un des buts de l'invention est donc de remédier à cet inconvénient en proposant une pédale de cycle de conception simple et peu onéreuse permettant d'améliorer le pédalage du cycliste.
A cet effet, et conformément à l'invention, il est proposé une pédale de cycle comportant un corps de pédale constitué d'une platine horizontale globalement rectangulaire munie sur sa face supérieure de moyens de blocage d'une chaussure de cycliste et sur l'un de ses bords longitudinaux d'un étui contenant un axe de pédale apte à être fixé à l'extrémité libre d'une manivelle de pédalier, ladite platine étant solidarisée à l'étui de telle manière que sa face supérieure s'étende sous l'axe de pédale suivant une distance a et que l'axe d'appui de la chaussure sur la platine de pédale, qui est confondu avec le plan frontal passant par le métatarse du gros orteil du pied du cycliste lorsque ce dernier pédale, s'étende devant l'axe de la pédale suivant une distance b afin que l'axe d'appui de la pédale décrive une courbe circulaire de centre O' et de rayon r' décalée de a vers le bas et de b vers l'avant par rapport à la courbe circulaire de l'axe de la pédale de centre O, où O est l'axe du boîtier de pédalier du cycle, et de rayon r, remarquable en ce que les moyens de blocage comprennent d'une part un organe d'enclenchement avant apte à coopérer avec la partie avant d'une cale solidaire de la semelle de la chaussure de cycliste et d'autre part un organe d'enclenchement arrière mobile apte à coopérer avec la partie arrière de la cale de la chaussure, l'élément d'enclenchement arrière mobile étant apte à être déplacé sous la pression de la partie arrière de la cale de la chaussure depuis une position dite d'enclenchement, en passant par une position d'ouverture permettant l'introduction ou le retrait de la partie arrière de la cale de la chaussure, jusqu'à un retour à la position d'enclenchement contraint par un moyen élastique.

On comprend bien que, contrairement aux pédales de l'art antérieur où l'axe d'appui de la chaussure sur la platine de la pédale est confondu avec l'axe de la pédale, ledit axe d'appui s'étend sous l'axe de pédale suivant une distance a et devant l'axe de la pédale suivant une distance b permettant ainsi d'augmenter le bras de levier de la pédale lorsque la manivelle est menant et de diminuer ledit bras de levier lorsque la manivelle est menée.

D'autres avantages et caractéristiques ressortiront mieux de la description qui va suivre, de plusieurs variantes d'exécution, données à titre d'exemples non limitatifs, de la pédale pour cycle conforme à l'invention en référence aux dessins annexés sur lesquels :
- la figure 1 est une vue en perspective de la pédale pour cycle suivant l'invention,
- la figure 2 est une représentation schématique du parcours de la pédale suivant l'invention au cours d'une révolution de la manivelle du pédalier,
- la figure 3 est une vue en coupe longitudinale de la pédale pour cycle suivant l'invention représentée sur la figure 1, en position d'introduction de la partie avant de la cale d'une chaussure de cycliste dans la griffe avant de la pédale,
- la figure 4 est une vue en coupe longitudinale de la pédale pour cycle suivant l'invention représentée sur la figure 1, en position d'introduction de la partie arrière de la cale d'une chaussure de cycliste dans la griffe arrière articulée de la pédale,
- la figure 5 est une vue en coupe longitudinale de la pédale pour cycle suivant l'invention représentée sur la figure 1, en position de blocage de la cale d'une chaussure de cycliste dans les griffes avant et arrière de la pédale,
- la figure 6 est une vue en perspective d'une première variante d'exécution de la pédale de cycle conforme à l'invention,
- la figure 7 est une vue en perspective d'une troisième variante d'exécution de la pédale de cycle suivant l'invention,
- la figure 8 est une vue en perspective de la cale de chaussure de cycliste apte à coopérer avec la griffe avant de la variante d'exécution de la pédale de cycle suivant l'invention représentée sur la figure 7,
- la figure 9 est une vue en coupe longitudinale d'une manivelle équipée d'une autre variante d'exécution de la pédale de cycle suivant l'invention,
- la figure 10 est une vue en perspective d'une variante d'exécution de la pédale suivant l'invention et de la manivelle du pédalier,
- la figure 11 est une vue en coupe longitudinale de la manivelle équipée de la pédale suivant l'invention représentée sur la figure 10,
- la figure 12 est une vue de côté d'une dernière variante d'exécution de la pédale de cycle suivant l'invention,
- la figure 13 est une vue en coupe longitudinale de la variante d'exécution de la pédale représentée sur la figure 12,
- la figure 14 est une représentation schématique du parcours de la variante d'exécution de la pédale suivant l'invention représentée sur les figures 12 et 13 au cours d'une révolution de la manivelle du pédalier.

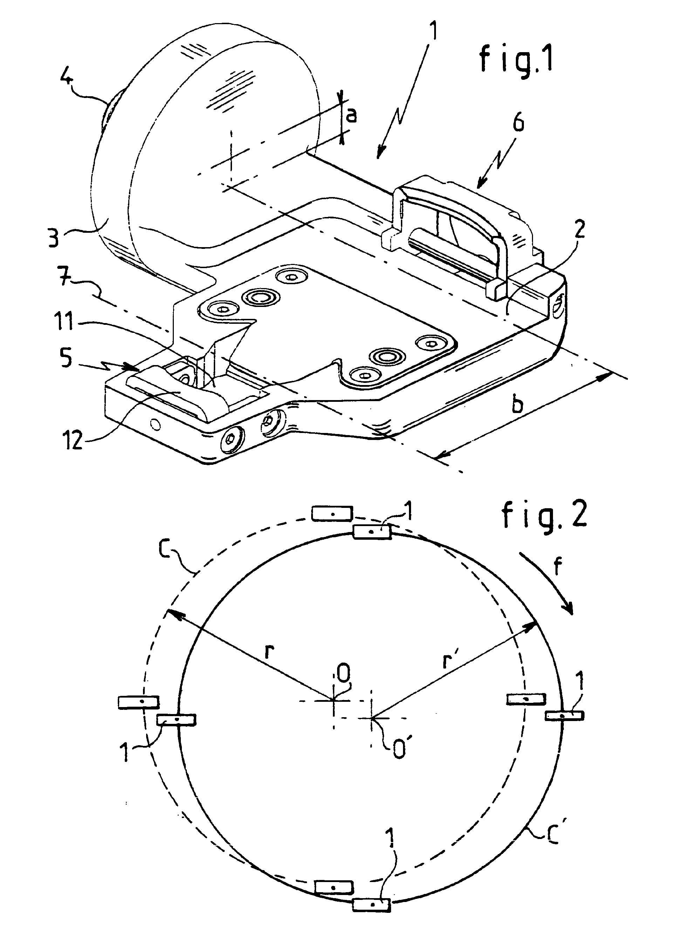

En référence à la figure 1, la pédale de cycle suivant l'invention comporte un corps de pédale 1 constitué d'une platine horizontale 2 globalement rectangulaire munie sur l'un de ses bords longitudinaux d'un étui 3 contenant un axe de pédale 4 apte à être fixé à l'extrémité libre d'une manivelle de pédalier, non représentée sur la figure, et sur sa face supérieure de moyens de blocage avant 5 et arrière 6 d'une chaussure de cycliste.

Il va de soi que l'axe de pédale 4 est monté sur un roulement à billes positionné dans l'étui 3 du corps de pédale 1 afin de permettre la rotation de la platine horizontale 2 autour de l'axe de pédale 4 au cours du pédalage.

La platine 2 est solidarisée à l'étui 3 de telle manière que sa face supérieure s'étende sous l'axe de pédale 4 suivant une distance a et que l'axe d'appui 7, représenté en traits mixtes sur la figure 1, de la chaussure sur la platine 2 de la pédale, qui est confondu avec le plan frontal passant par le métatarse du gros orteil du pied du cycliste lorsque ce dernier pédale, s'étende devant l'axe de la pédale 4 suivant une distance b. Ainsi l'axe d'appui 7 de la pédale décrit, en référence à la figure 2, lors d'un pédalage dans le sens des aiguilles d'une montre comme l'indique la flèche f, une courbe circulaire C' de centre O' et de rayon r' décalé de a vers le bas et de b vers l'avant par rapport à la courbe circulaire C de l'axe de la pédale de centre O, où O est l'axe du boîtier de pédalier du cycle, et de rayon r. On observera que la courbe C correspond à la course d'une pédale de l'art antérieur, c'est-à-dire une pédale dont la face supérieure de la platine et l'axe d'appui 7 de la chaussure sur ladite platine 2 de la pédale sont confondus avec l'axe de la pédale 4 qui est fixée à l'extrémité libre de la manivelle du pédalier. On notera, par ailleurs que, à proximité du point mort haut, c'est-à-dire à proximité de l'extrémité supérieure de la courbe C', l'axe d'appui 7 de la chaussure sur la platine 2 de la pédale est en avance par rapport à l'axe d'appui de la chaussure d'une pédale de l'art antérieur, ce qui occasionne un passage plus rapide dudit point mort haut. De plus, dans le quadrant antérieur supérieur et sur la plus grande partie du quadrant antérieur inférieur de la courbe C', l'axe d'appui 7 de la chaussure sur la platine 2 de pédale se situe devant la position de l'axe d'appui de la chaussure sur la platine d'une pédale de l'art antérieur créant ainsi un bras de levier plus important par rapport aux pédales de l'art antérieur ce qui facilite le pédalage du cycliste en procurant pour une même force appliquée sur la pédale un moment plus important. Enfin, entre le point mort bas, c'est-à-dire le point de passage de l'axe d'appui de la chaussure sur la platine 2 de la pédale à l'extrémité inférieure de la courbe C', jusqu'au point mort haut, l'axe d'appui 7 de la chaussure sur la platine 2 de la pédale se situe également en avant de l'axe d'appui de la pédale de l'art antérieur ce qui n'affecte pas le rendement de la pédale suivant l'invention puisque entre le point mort bas et le point mort haut, le cycliste n'applique quasiment aucune force sur la pédale.

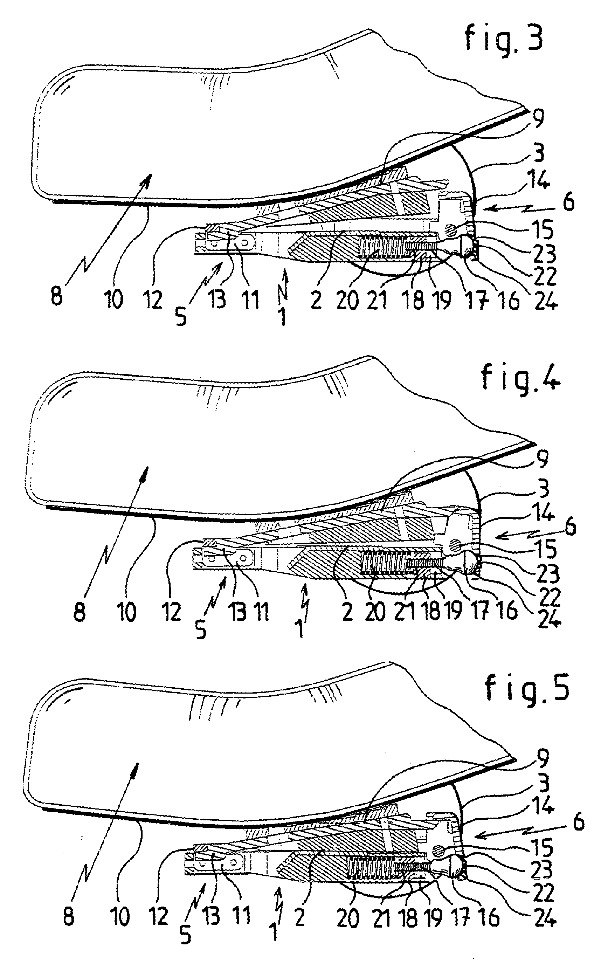

En référence aux figures 1, 3, 4 et 5, la pédale de cycle suivant l'invention comporte sur la face supérieure de la platine 2 des moyens de blocage avant 5 et arrière 6 d'une chaussure de cycliste 8 (figure 3 à figure 5). Les moyens de blocage 5, 6 d'une chaussure 8 comprennent d'une part un organe d'enclenchement avant 5 apte à coopérer avec la partie avant d'une cale 9 solidaire de la semelle 10 de la chaussure 8 de cycliste et d'autre part un organe d'enclenchement arrière 6 mobile apte à coopérer avec la partie arrière de la cale 9 de la chaussure 8, l'élément d'enclenchement arrière mobile 6 étant apte à être déplacé sous la pression de la partie arrière de la cale 9 de la chaussure 8 depuis une position dite d'enclenchement, en passant par une position d'ouverture permettant l'introduction ou le retrait de la partie arrière de la cale 9 de la chaussure 8, jusqu'à un retour à la position d'enclenchement contraint par un moyen élastique qui sera détaillé plus loin.

L'organe d'enclenchement avant 5 consiste en un évidemment 11 pratiqué sur la face supérieure de la platine 2, dans sa partie avant, et dans lequel est positionnée une griffe 12 faisant légèrement saillie de la face supérieure de la platine 2 qui est apte à recevoir par encastrement une patte 13 faisant saillie de la partie avant de la cale 9 de la chaussure 8 de cycliste. Cette griffe 12 consiste, par exemple, en une pièce métallique en forme générale de U dont les branches sont fixées sur les parois intérieures de l'évidemment 11 pratiqué sur la face supérieure de la platine 2 de telle sorte que la base du U s'étende globalement parallèlement à la face supérieure de la platine 2 en faisant légèrement saillie de cette dernière.

Par ailleurs, l'élément d'enclenchement arrière mobile 6 consiste en une seconde griffe 14 articulée autour d'un axe transversal 15 s'étendant à l'arrière de la platine 2, ledit axe transversal 15 s'étendant parallèlement à l'axe 4 de l'étui 3 de la pédale, et à l'extrémité inférieure de laquelle prend appui une rotule 16 positionnée à l'extrémité libre d'une tige 17 s'étendant longitudinalement sous l'axe transversal 15 d'articulation de la griffe 14. Cette tige 17 est solidaire d'un piston 18 coulissant dans un évidemment longitudinal 19 pratiqué dans la platine 2 et débouchant à l'extrémité arrière de ladite platine 2, ledit piston 18 prenant appui sur un ressort hélicoïdal 20 positionné dans ledit évidemment longitudinal 19. La tige 17 consiste, de préférence, en une tige filetée coopérant avec un taraudage 21 pratiqué dans le piston 18 coulissant dans l'évidemment longitudinal 19. De plus l'extrémité libre de la rotule 16 comprend une tête de vis 22 s'étendant à travers une lumière 23 pratiquée à l'extrémité inférieure de la griffe 14 et débouchant sur sa face arrière, la rotule 16 prenant appui dans un creux concave 24 dont le rayon de courbure est identique à celui de la rotule 16.

On expliquera maintenant la fixation d'une chaussure à la pédale de cycle suivant l'invention en référence aux figures 3 à 5.

La patte 13 faisant saillie de la partie avant de la cale 9 de la chaussure 8 est introduite dans l'évidemment 11 jusqu'à ce que ladite patte 13 viennent s'encastrer sous la griffe avant 12 (figure 3). Le cycliste exerce alors une pression sur son talon jusqu'à ce que la partie arrière de la cale 9 de la chaussure 8, avantageusement biseautée, prenne appui sur la seconde griffe 14 de l'organe d'enclenchement arrière 6 entraînant cette dernière en rotation autour de son axe 15. On notera que lors de la rotation de la seconde griffe 14, la rotule 16 entraîne en translation dans l'évidemment longitudinal 19 la tige 17 et le piston 18 en comprimant le ressort hélicoïdale 20 (figure 4). En poursuivant sa pression sur le talon, la cale 9 prend alors appui sur la face supérieure de la platine 2 de la pédale, l'extrémité arrière de la cale 9 s'étendant alors sous la griffe 14 de l'organe d'enclenchement arrière 6 qui est revenue dans sa position initiale dite d'enclenchement contrainte par le ressort hélicoïdale 20 qui a déplacé le piston 18 et la tige 17 à l'extrémité libre de laquelle est solidarisée la rotule 16 afin d'entraîner en rotation la seconde griffe 14 jusqu'à sa position initiale d'enclenchement. De manière classique, le retrait de la cale 9 entre les organes d'enclenchement avant 5 et d'enclenchement arrière 6 est effectué en procurant un mouvement de supination de la cheville permettant de libérer la partie arrière de la cale 9 de l'organe d'enclenchement arrière 6.

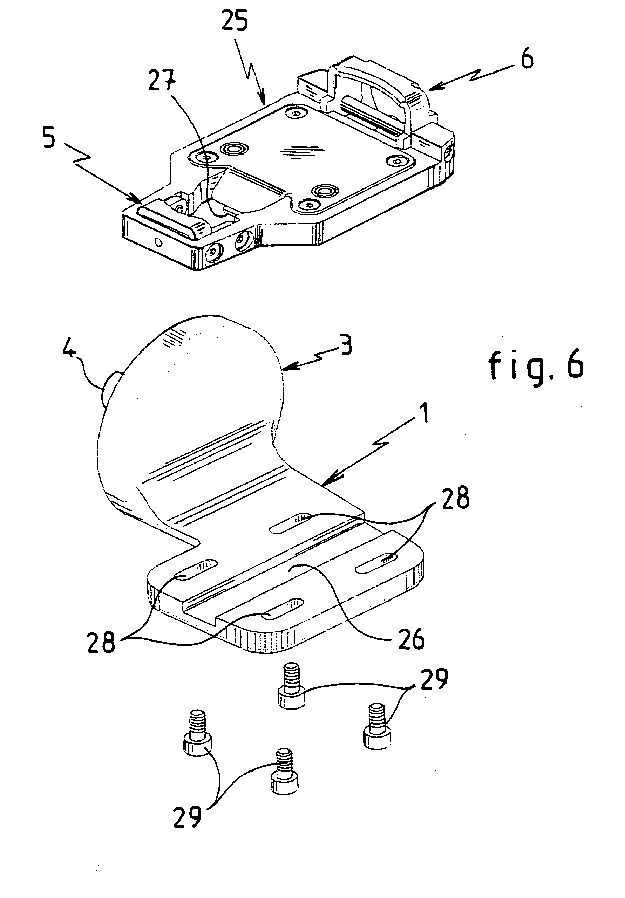

Selon une première variante d'exécution de la pédale de cycle suivant l'invention, en référence à la figure 6, ladite platine 2 comprend sur sa face supérieure un plateau mobile 25 apte à coulisser longitudinalement et sur la face supérieure duquel sont solidaires les moyens de blocage avant 5 et arrière 6 d'une chaussure de cycliste, tels que décrits précédemment, de manière à adapter la position longitudinale desdits moyens de blocage avant 5 et arrière 6 de la chaussure en fonction de sa pointure ou bien encore à varier la distance b séparant l'axe de la pédale 4 de l'axe d'appui 7 de la chaussure sur la platine 2 de la pédale. La face supérieure de la platine 2 comprend une gorge longitudinale 26 de section transversale en forme générale de U dans laquelle vient coulisser un guide longitudinal 27 de section transversale globalement en forme de U positionné sous le plateau mobile 25 comprenant les organes de blocage avant 5 et arrière 6. La platine 2 comprend, par ailleurs, quatre lumières oblongues longitudinales 28 positionnées de part et d'autre de la gorge longitudinale 26 et traversées par des boulons 29 aptes à coopérer avec des trous taraudés correspondant pratiqués sur la face inférieure du plateau mobile 25.

Il est bien évident que la platine 2 peut ne comprendre que deux lumières oblongues longitudinales 28 sans sortir du cadre de l'invention.

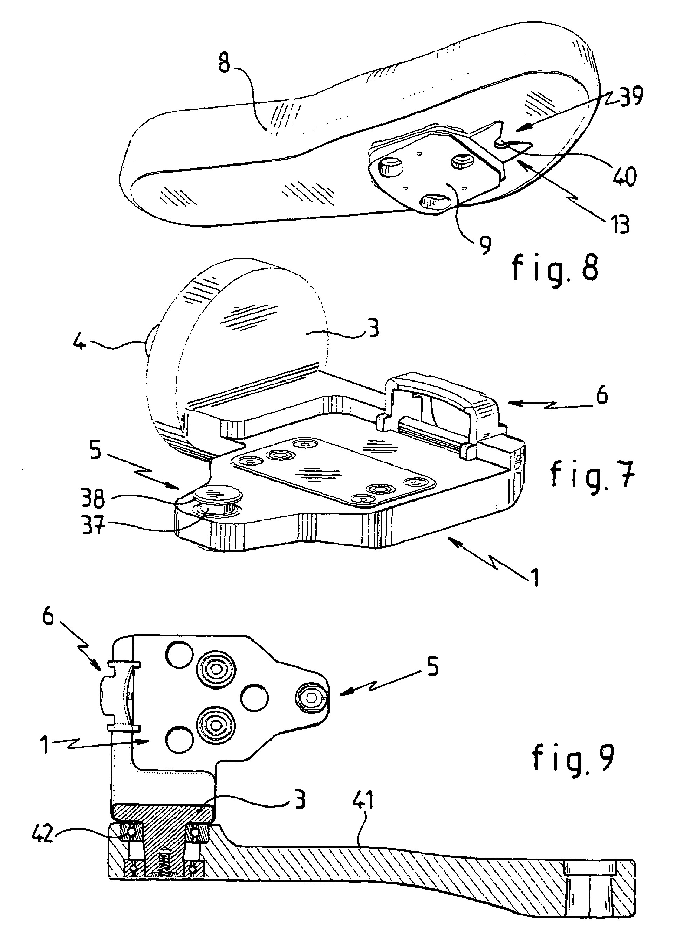

Selon une autre variante de la pédale suivant l'invention, en référence aux figures 7 et 8, l'organe d'enclenchement avant 5 de la pédale peut consister en un goujon 37 s'étendant verticalement depuis la face supérieure de la platine 2, dans sa partie avant, et comprenant à son extrémité supérieure des moyens de retenue formés par une collerette 38, ledit goujon 37 venant se loger dans un évidemment 39 pratiqué dans une patte 13 qui fait saillie de la partie avant de la cale 9 de la chaussure 8 de cycliste et qui présente une forme de V au fond duquel est pratiqué un évidemment complémentaire 40 globalement hémi-circulaire, de diamètre tout juste supérieur au diamètre du goujon 37.

Il est bien évident que les moyens de retenue positionnés à l'extrémité supérieure du goujon 37 peuvent consister en des ailettes radiales sans pour autant sortir du cadre de l'invention.

Par ailleurs, il est bien évident que l'étui 3 du corps de la pédale peut être solidarisé à l'extrémité libre d'une manivelle 41 de pédalier sur un roulement à billes 42 solidaire de l'extrémité libre de ladite manivelle 41, telle que représentée sur la figure 9, l'étui 3 ne contenant alors plus d'axe de pédale 4 montée sur un roulement à billes solidaire dudit étui 3.

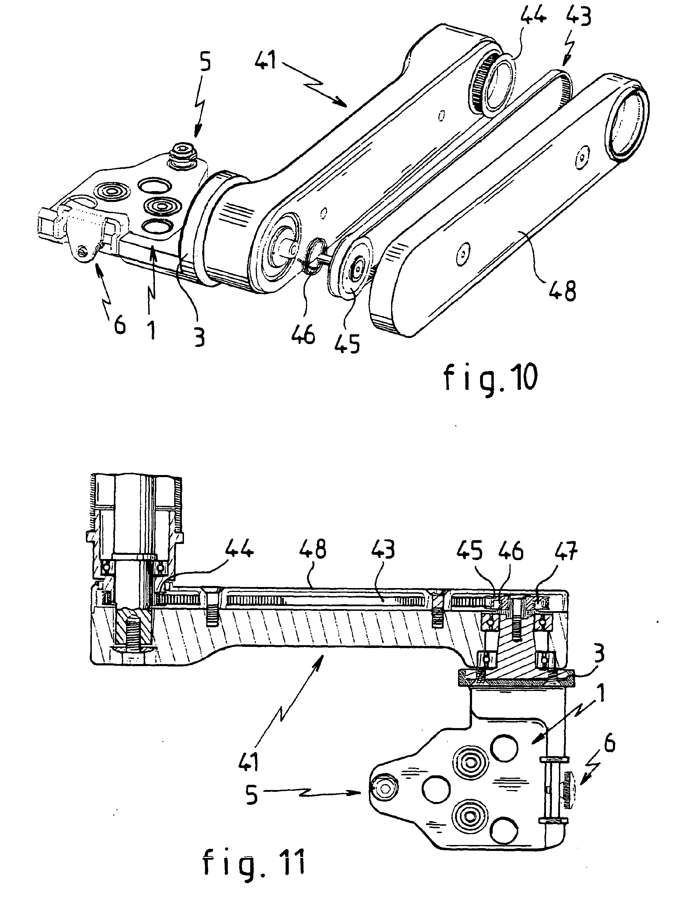

Selon une autre variante d'exécution de la pédale suivant l'invention, en référence aux figures 10 et 11, l'ensemble pédale/manivelle de pédalier 41 comprend une courroie 43 s'étendant le long de la manivelle 41 entre un pignon menant 44 solidaire de l'axe du boîtier de pédalier du vélo et un pignon mené 45 solidaire de l'étui 3 de la pédale de sorte que la rotation de la manivelle 41 entraîne la rotation de la platine 2 de la pédale à hauteur de l'axe de pédale. Le pignon mené 45 est solidarisé à l'étui 3 de la pédale par un ressort hélicoïdal 46 positionné à l'intérieur d'un évidemment circulaire 47 pratiqué dans le pignon mené 45 de telle sorte que l'axe du ressort s'étende coaxialement à l'axe de rotation du pignon mené 45, les extrémités du ressort hélicoïdal 46 étant solidaires respectivement du pignon mené 45 et de l'étui 3 de la pédale.

Il est bien évident que le pignon mené 45 peut être solidarisé à l'étui 3 de la pédale par tout moyen élastique bien connu de l'Homme de l'art.

De préférence, il est prévu un carter de protection 48 apte à s'emboîter sur la manivelle 41 pour coiffer la courroie 43 et les pignons menant 44 et menés 45.

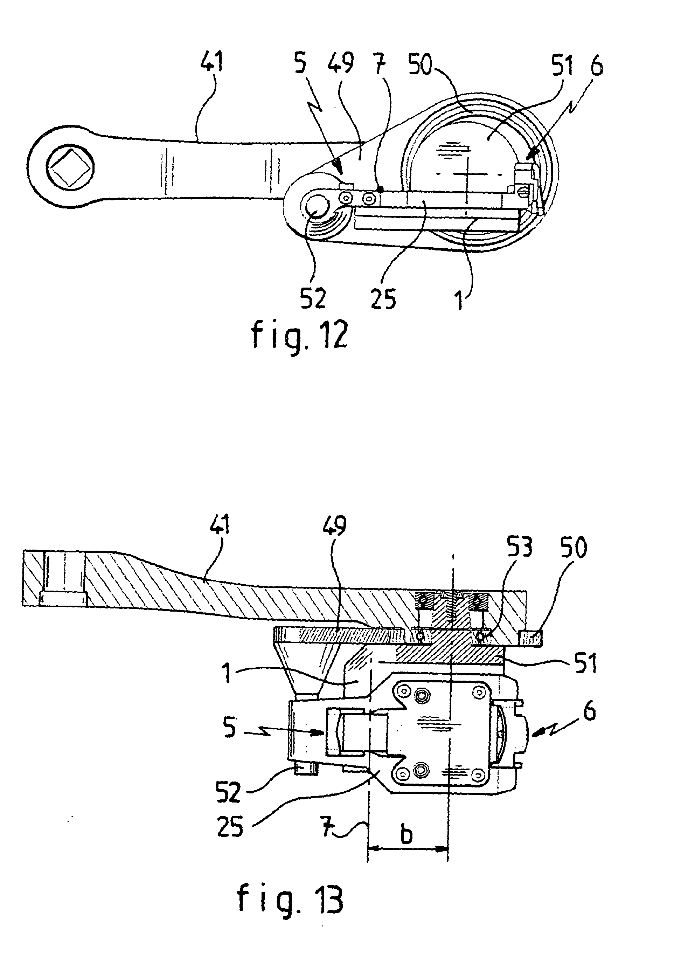

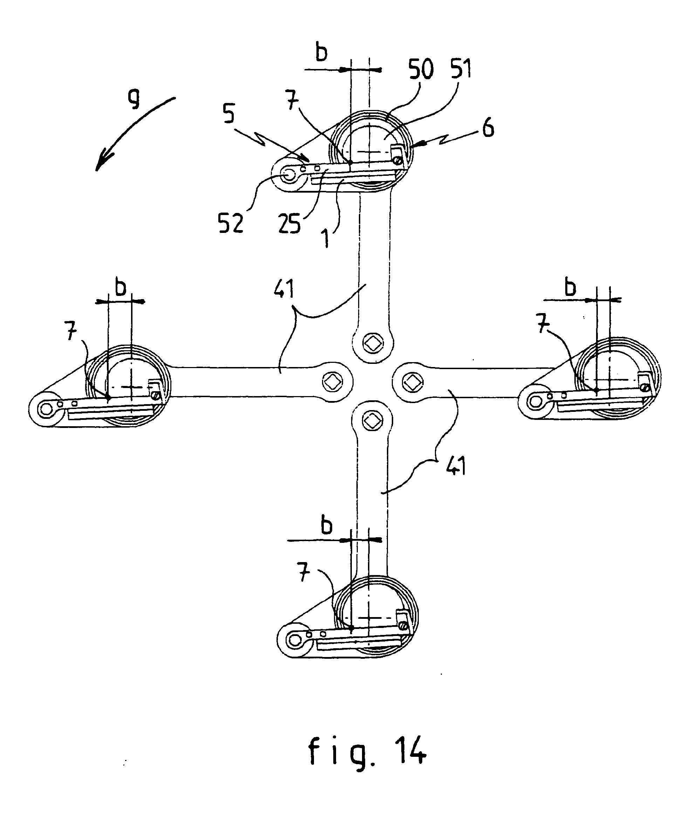

Enfin, selon une dernière variante d'exécution de la pédale suivant l'invention, en référence aux figures 12 à 14, cette dernière comprend un plateau mobile 25 apte à coulisser longitudinalement sur la face supérieure de la platine 2 de la pédale, le plateau mobile 25 étant muni des moyens de blocage avant 5 et arrière 6 d'une chaussure de cycliste. La pédale comprend, par ailleurs, une bielle 49 dont une première extrémité est montée libre en rotation autour d'un excentrique 50 d'un étui 51 solidaire de l'extrémité libre de la manivelle 41 et dont la seconde extrémité comprend un axe transversal 52 autour duquel est monté libre en rotation l'extrémité avant du plateau mobile 25 de la pédale, la partie arrière de la platine 2 de la pédale étant montée libre en rotation autour de l'axe de l'extrémité libre de la manivelle 41 sur un roulement à billes 53.

Une telle configuration permet de faire varier la distance b séparant l'axe de la pédale de l'axe d'appui 7 de la chaussure sur ladite pédale tout au long de la révolution circulaire de la pédale au cours du pédalage. Ainsi, en référence à la figure 16, lors d'une révolution de la pédale dans le sens inverse des aiguilles d'une montre, comme l'indique la flèche g, la platine 2 de la pédale reste globalement horizontale au cours de la révolution de la pédale et la distance b séparant l'axe de la pédale de l'axe d'appui 7 de la chaussure sur ladite pédale augmente dans les quadrants antérieur et postérieur supérieurs, c'est-à-dire entre les positions où la manivelle 41 se situe globalement horizontalement vers l'avant et vers l'arrière, puis diminue dans les quadrants antérieur et postérieur inférieurs. On notera que la distance b séparant l'axe de la pédale de l'axe d'appui 7 de la chaussure sur ladite pédale et maximale lorsque la pédale se situe dans sa position globalement horizontale vers l'avant, c'est-à-dire lorsque la pression du pied exercée par le cycliste est également maximale offrant ainsi un couple plus important lors du pédalage par rapport aux pédales de l'art antérieur.

Enfin, il va de soi que les exemples que l'on vient de donner ne sont que des illustrations particulières en aucun cas limitatives quant au domaine d'application de l'invention.

## Revendications

1. Pédale de cycle comportant un corps de pédale (1) constitué d'une platine horizontale (2) globalement rectangulaire munie sur sa face supérieure de moyens de blocage (5 6)d'une chaussure (8) de cycliste et sur l'un de ses bords longitudinaux d'un étui (3) contenant un axe de pédale (4) apte à être fixé à l'extrémité libre d'une manivelle (41) de pédalier, ladite platine (2) étant solidarisée à l'étui (3) de telle manière que sa face supérieure s'étende sous l'axe de pédale (4) suivant une distance a et que l'axe d'appui (7) de la chaussure sur la platine (2) de la pédale, qui est confondu avec le plan frontal passant par le métatarse du gros orteil du pied du cycliste lorsque ce dernier pédale, s'étende devant l'axe de la pédale (4) suivant une distance b afin que l'axe d'appui (7) de la pédale décrive une courbe circulaire de centre O' et de rayon r' décalée de a vers le bas et de b vers l'avant par rapport à la courbe circulaire de l'axe de la pédale (4) de centre O, où O est l'axe du boîtier de pédalier du cycle, et de rayon r, **caractérisée en ce que** les moyens de blocage (5, 6) comprennent d'une part un organe d'enclenchement avant (5) apte à coopérer avec la partie avant d'une cale (9) solidaire de la semelle (10) de la chaussure (8) de cycliste et d'autre part un organe d'enclenchement arrière (6) mobile apte à coopérer avec la partie arrière de la cale (9) de la chaussure (8), l'élément d'enclenchement arrière (6) mobile étant apte à être déplacé sous la pression de la partie arrière de la cale (9) de la chaussure (8) depuis une position dite d'enclenchement, en passant par une position d'ouverture permettant l'introduction ou le retrait de la partie arrière de la cale (9) de la chaussure (8), jusqu'à un retour à la position d'enclenchement contraint par un moyen élastique (20).

2. Pédale suivant la revendication précédente **caractérisée en ce que** la platine (2) comprend sur sa face supérieure un plateau mobile (25) apte à coulisser longitudinalement et sur la face supérieure duquel sont solidaires les moyens de blocage (5 6) d'une chaussure (8) de cycliste de manière à adapter la position longitudinale desdits moyens de blocage (5 6) de la chaussure (8) en fonction de sa pointure ou bien encore à varier la distance b séparant l'axe de la pédale (4) de l'axe d'appui (7).

3. Pédale suivant la revendication 2 **caractérisée en ce que** la platine (2) comprend au moins deux lumières longitudinales (28) traversées par deux boulons (29) aptes à coopérer avec deux trous taraudés pratiqués sur la face inférieure du plateau mobile (25).

4. Pédale suivant l'une quelconque des revendications précédentes **caractérisée en ce que** l'organe d'enclenchement avant (5) consiste en un évidemment (11) pratiqué sur la face supérieure de la platine (2), dans sa partie avant, et dans lequel est positionnée une griffe (12) faisant légèrement saillie de la face supérieure de la platine (2) et dans laquelle vient s'encastrer une patte (13) faisant saillie de la partie avant de la cale (9) de la chaussure (8) de cycliste.

5. Pédale suivant l'une quelconque des revendications 1 à 3 **caractérisée en ce que** l'organe d'enclenchement avant (5) consiste en un goujon (37) s'étendant verticalement depuis la face supérieure de la platine (2), dans sa partie avant, et comprenant à son extrémité supérieure des moyens de retenue (38), ledit goujon (37) venant se loger dans un évidemment (39) pratiqué dans une patte (13) qui fait saillie de la partie avant de la cale (9) de la chaussure (8) de cycliste et qui présente une forme de V au fond duquel est pratiqué un évidemment complémentaire (40) globalement hémi-circulaire de diamètre tout juste supérieur au diamètre du goujon (37).

6. Pédale suivant la revendication 5 **caractérisée en ce que** les moyens de retenue (38) consistent en une collerette.

7. Pédale suivant la revendication 5 **caractérisée en ce que** les moyens de retenue (38) consistent en des ailettes radiales.

8. Pédale suivant l'une quelconque des revendications 1 à 7 **caractérisée en ce que** l'élément d'enclenchement arrière (6) mobile consiste en une griffe (14) articulée autour d'un axe transversal (15) s'étendant à l'arrière de la platine (2) et sur l'extrémité inférieure de laquelle prend appui une rotule (16) positionnée à l'extrémité libre d'une tige (17) s'étendant longitudinalement sous l'axe transversal d'articulation (15) de la griffe (14) et solidaire d'un piston coulissant dans un évidemment longitudinal (19) pratiqué dans la platine (2) et débouchant à l'extrémité arrière de ladite platine (2), ledit piston (18) prenant appui sur un ressort hélicoïdal (20) positionné dans l'évidemment longitudinal (19).

9. Pédale suivant la revendication 8 **caractérisée en ce que** la tige (17) consiste en une tige filetée coopérant avec un trou taraudé (21) pratiqué dans le piston (18) coulissant dans l'évidement longitudinal (19).

10. Pédale suivant la revendication 9 **caractérisée en ce que** l'extrémité libre de la rotule (16) comprend une tête de vis (22) s'étendant à travers une lumière (23) pratiquée à l'extrémité inférieure de la griffe (14) et débouchant sur sa face arrière.

11. Pédale suivant l'une quelconque des revendications 9 ou 10 **caractérisée en ce que** la rotule (16) prend appui dans un creux concave (24) dont le rayon de courbure est identique à celui de la rotule (16).

12. Pédale suivant la revendication 2 **caractérisée en ce qu'**elle comprend des moyens pour faire varier la distance b séparant l'axe de la pédale (4) de l'axe d'appui (7) de la chaussure (8) sur ladite pédale tout au long de la révolution de la pédale au cours du pédalage.

13. Pédale suivant la revendication 12 **caractérisée en ce qu'**elle comprend une bielle (49) dont une première extrémité est montée libre en rotation autour d'un excentrique (50) d'un étui (5) solidaire de l'extrémité libre de la manivelle (41) et dont la seconde extrémité comprend un axe transversal (52) autour duquel est montée libre en rotation l'extrémité avant du plateau mobile (25) de la pédale qui est apte à coulisser longitudinalement sur la face supérieure de la platine (2), la partie arrière de ladite platine (2) de la pédale étant monté libre en rotation autour de l'axe de l'extrémité de la manivelle (41).

14. Pédale suivant l'une quelconque des revendications 1 à 11 **caractérisée en ce qu'**elle comprend une courroie (43) s'étendant le long de la manivelle entre un pignon menant (44) solidaire de l'axe du boîtier de pédalier et un pignon mené (45) solidaire de l'étui (3) de la pédale de sorte que la rotation de la manivelle (41) entraîne la rotation de la platine (2) de la pédale autour de l'axe de pédale (4).

15. Pédale suivant la revendication 14 **caractérisée en ce que** le pignon mené (45) est solidarisé à l'étui (3) de la pédale par des moyens élastiques (46).

16. Pédale suivant la revendication 15 **caractérisée en ce que** le pignon mené (45) est solidarisé à l'étui (3) de la pédale par un ressort hélicoïdal (46) positionné à l'intérieur d'un évidemment circulaire (47) pratiqué dans le pignon mené (45) de telle sorte que l'axe du ressort soit coaxial à l'axe de rotation du pignon mené (45), les extrémités du ressort (46) hélicoïdal étant solidaires respectivement du pignon mené (45) et de l'étui (3) de la pédale.

17. Pédale suivant la revendication 16 **caractérisée en ce qu'**elle comprend un carter de protection (48) apte à s'emboîter sur la manivelle (41) pour coiffer la courroie (43) et les pignons menant (44) et mené (45).

## Claims

1. Cycle pedal comprising a pedal body (1) consisting of a generally rectangular horizontal fixture (2) comprising on the top face thereof means for locking (5, 6) a cyclist's shoe (8) and on one of the longitudinal edges thereof a box (3) containing a pedal axis (4) suitable for being attached at the free end of a pedal and gear mechanism crank (41), said fixture (2) being attached to the case (3) such that the top face thereof extends under the pedal axis (4) along a distance a and that the shoe bearing axis (7) on the fixture (2) of the pedal, which is merged with the frontal plane passing through the metatarsal of the big toe of the cyclist's foot when said cyclist pedals, extends along the pedal axis (4) along a distance b so that the bearing axis (7) of the pedal describes a circular curve having the centre O' and radius r' offset by a downwards and by b to the front with respect to the circular curve of the pedal axis (4) having a centre O, where O is the axis of the cycle pedal and gear mechanism housing, and a radius r, **characterised in that** the locking means (5, 6) comprise, firstly, a front engagement member (5) suitable for cooperating with the front part of the shim (9) attached to the sole (10) of the cyclist's shoe (8) and, secondly, a mobile rear engagement member (6) suitable for cooperating with the rear part of the shim (9) of the shoe (8), the mobile rear engagement member (6) being suitable for being moved under pressure from the rear part of the shim (9) of the shoe (8) from a so-called engagement position, via an opening position enabling the insertion or removal of the rear part of the shim (9) of the shoe (8), until a return to the engagement position forced by an elastic means (20).

2. Pedal according to the above claim **characterised in that** the fixture (2) comprises on the top face thereof a mobile plate (25) suitable for sliding longitudinally and on the top face whereof the locking means (5, 6) of a cyclist's shoe (8) are attached so as to adapt the longitudinal position of said locking means (5, 6) of the shoe (8) according to its size or to vary the distance b separating the pedal axis (4) from the bearing axis (7).

3. Pedal according to claim 2 **characterised in that** the fixture (2) comprises at least two longitudinal slots (28) passed through by two bolts (29) suitable for cooperating with two threaded holes produced on the bottom face of the mobile plate (25).

4. Pedal according to any of the above claims **characterised in that** the front engagement member (5) consists of a recess (11) produced on the top face of the fixture (2), in the front part thereof, and wherein a claw (12) is positioned, protruding slightly from the top face of the fixture (2) and wherein a tab (13) is embedded, protruding from the front part of the shim (9) of the cyclist's shoe (8).

5. Pedal according to any of claims 1 to 3 **characterised in that** the front engagement member (5) consists of a stud (37) extending vertically from the top face of the fixture (2), in the front part thereof, and comprising at the top end thereof holding means (38), said stud (37) being housed in a recess (39) created in a tab (13) protruding from the front part of the shim (9) of the cyclist's shoe (8) and which displays a V shape at the bottom whereof a generally semi-circular additional recess (40), having a diameter just greater than the diameter of the stud (37), is produced.

6. Pedal according to claim 5 **characterised in that** the holding means (38) consist of a collar.

7. Pedal according to claim 5 **characterised in that** the holding means (38) consist of radial fins.

8. Pedal according to any of claims 1 to 7, **characterised in that** the mobile rear engagement member (6) consists of a claw (14) articulated about a transversal axis (15) extending at the rear of the fixture (2) and on the bottom end whereof rests a ball joint (16) positioned at the free end of a rod (17) extending longitudinally under the transversal hinge axis (15) of the claw (14) and attached to a piston sliding in a longitudinal recess (19) produced in the fixture (2) and opening at the rear end of said fixture (2), said piston (18) resting on a helical spring (20) positioned in the longitudinal recess (19).

9. Pedal according to claim 8 **characterised in that** the rod (17) consists of a threaded rod cooperating with the threaded hole (21) produced in the piston (18) sliding in the longitudinal recess (19).

10. Pedal according to claim 9 **characterised in that** the free end of the ball joint (16) comprises a screw head (22) extending through a slot (23) produced at the bottom end of the claw (14) and opening onto the rear face thereof.

11. Pedal according to any of claims 9 or 10 **characterised in that** the ball joint (16) rests in a concave hollow (24) wherein the radius of curvature is identical to that of the ball joint (16).

12. Pedal according to claim 2 **characterised in that** it comprises means to vary the distance b separating the pedal axis (4) from the bearing axis (7) of the shoe (8) on said pedal throughout the revolution of the pedal during pedalling.

13. Pedal according to claim 12 **characterised in that** it comprises a connecting rod (49) wherein a first end is mounted free in rotation about a cam (50) of a case (3) attached to the free end of the crank (41) and wherein the second end comprises a transversal axis (52) about which the front end of the mobile plate (25) of the pedal is mounted free in rotation, which is suitable for sliding longitudinally on the top face of the fixture (2), the rear part of said fixture (2) of the pedal being mounted free in rotation about the axis of the end of the crank (41).

14. Pedal according to any of claims 1 to 11 **characterised in that** it comprises a belt (43) extending along the crank between a driving pinion (44) attached to the axis of the pedal and gear mechanism housing and a driven pinion (45) attached to the case (3) of the pedal such that the rotation of the crank (41) drives the rotation of the fixture (2) of the pedal about the pedal axis (4).

15. Pedal according to claim 14 **characterised in that** the driven pinion (45) is attached to the case (3) of the pedal by elastic means (46).

16. Pedal according to claim 14 **characterised in that** the driven pinion (45) is attached to the case (3) of the pedal by a helical spring (46) positioned inside a circular recess (47) produced in the driven pinion (45) such that the spring axis is coaxial with the axis of rotation of the driven pinion (45), the ends of the helical spring (46) being attached to the driven pinion (45) and the case (3) of the pedal, respectively.

17. Pedal according to claim 16 **characterised in that** it comprises a protective housing (48) suitable for being fitted on the crank (41) to cover the belt (43) and the driving (44) and driven (45) pinions.

## Patentansprüche

1. Fahrradpedal mit einem Pedalkörper (1), der aus einer weitgehend rechteckigen, waagrechten Grundplatte (2) besteht, die auf ihrer Oberseite Blockiermittel (5,6) zum Blockieren eines Fahrradschuhs (8) und auf ihren Längsseiten ein Seitenteil (3) besitzt, das eine Pedalachse (4) aufweist, die auf dem freien Ende eines Tretkurbelarms (41) befestigt werden kann, wobei die Grundplatte (2) mit dem Seitenteil (3) derart fest verbunden ist, dass sich ihre Oberseite über eine Distanz a unter der Pedalachse (4) erstreckt und die Aufstützachse (7) zum Aufstützen des Schuhs auf der Grundplatte (2) des Pedals, die mit der Frontfläche zusammenfällt, die durch den Mittelknochen der großen Zehe des Radfahrerfußes verläuft, wenn dieser das Pedal betätigt, sich vor der Pedalachse (4) über eine Distanz b erstreckt, damit die Aufstützachse (7) des Pedals eine kreisförmige Kurve mit einem Mittelpunkt O' und einem Radius r' beschreibt, die gegenüber der kreisförmigen Kurve der Pedalachse (4) mit einem Mittelpunkt O und einem Radius r um a nach unten und um b nach vorn versetzt ist, wobei der mit einem Mittelpunkt O die Achse des Tretlagergehäuses des Fahrrads ist, **dadurch gekennzeichnet, dass** die Blockiermittel (5, 6) einerseits aus einem vorderen Einrastelement (5), das mit dem Vorderteil einer Verkeilung (9) zusammenwirken kann, die fest mit der Sohle (10) des Fahrradschuhs (8) verbunden ist, und andererseits aus einem hinteren beweglichen Einrastelement (6) bestehen, das mit dem Hinterteil der Verkeilung (9) des Schuhs (8) zusammenwirken kann, wobei das hintere, bewegliche Einrastelement (6) unter dem Druck des Hinterteils der Verkeilung (9) des Schuhs (8) aus einer sog. Einraststellung in eine Öffnungsstellung zum Einsetzen oder Herausnehmen des Hinterteils der Verkeilung (9) des Schuhs (8) und zurück in die durch ein elastisches Mittel gespannte (20) Einraststellung bewegt werden kann.

2. Pedal nach dem vorhergehenden Anspruch, **dadurch gekennzeichnet, dass** die Grundplatte (2) auf ihrer Oberseite eine bewegliche Platte (25) besitzt, die in Längsrichtung verschiebbar ist und mit deren Oberseite Blockiermittel (5, 6) zum Blockieren eines Fahrradschuhs (8) fest verbunden sind, so dass die Längsstellung der Blockiermittel (5, 6) zum Blockieren eines Fahrradschuhs (8) an die Schuhgröße angepasst werden können oder die Distanz b zwischen der Pedalachse (4) und der Aufstützachse (7) verändert werden kann.

3. Pedal nach Anspruch 2, **dadurch gekennzeichnet, dass** die Grundplatte (2) mindestens zwei Längslöcher (28) besitzt, durch die zwei Schrauben (29) eingesetzt werden können, die in zwei Gewindebohrungen auf der Unterseite der beweglichen Platte (25) passen.

4. Pedal nach einem der vorhergehenden Ansprüche, **dadurch gekennzeichnet, dass** das vordere Einrastelement 5) aus einer in der Oberseite der Grundplatte (2) auf deren Vorderteil vorgesehenen Aussparung (11) besteht, in der eine Klaue (12) positioniert ist, die leicht über die Oberseite der Grundplatte (2) hinausragt und in die eine Lasche (13) passt, die über das Vorderteil der Verkeilung (9) des Fahrradschuhs (8) hinausragt.

5. Pedal nach einem der Ansprüche 1 bis 3, **dadurch gekennzeichnet, dass** das vordere Einrastelement (5) aus einem Zapfen (37) besteht, der senkrecht auf der Oberseite der Grundplatte (2) auf deren Vorderteil angebracht ist und an seinem oberen Ende Haltemittel (38) besitzt, wobei der Zapfen (37) in einer Aussparung (39) sitzt, die in einer Lasche (13) vorgesehen ist, die über das Vorderteil der Verkeilung (9) des Fahrradschuhs (8) hinausragt und ein V-förmiges Profil besitzt, in dessen Vertiefung eine zusätzliche, weitgehend halbkreisförmige Aussparung (40) mit einem Durchmesser vorgesehen ist, der geringfügig größer als der des Zapfens (37) ist.

6. Pedal nach Anspruch 5, **dadurch gekennzeichnet, dass** die Haltemittel (38) aus einem Kragen bestehen.

7. Pedal nach Anspruch 5, **dadurch gekennzeichnet, dass** die Haltemittel (38) aus radialen Rippen bestehen.

8. Pedal nach einem der Ansprüche 1 bis 7, **dadurch gekennzeichnet, dass** das hintere bewegliche Einrastelement (6) aus einer Klaue (14) besteht, die um eine Querachse (15) auf der Rückseite der Grundplatte (2) schwenkbar ist, und an deren unterem Ende ein Kugelkopf (16) anliegt, der das freie Ende eines Bolzens (17) bildet, der in Längsrichtung unter der quer gerichteten Schwenkachse (15) der Kaue (14) ausgerichtet ist und fest mit einem Kolben verbunden ist, der in einer längsgerichteten Aussparung (19), die in der Grundplatte (2) bis zum Hinterende der Grundplatte (2) eingearbeitet ist, hin und her gleitet, während der Kolben (18) gegen eine Spiralfeder (20) in der längsgerichteten Aussparung (19) drückt.

9. Pedal nach Anspruch 8, **dadurch gekennzeichnet, dass** der Bolzen (17) ein Schraubbolzen ist, dessen Gewinde in eine im Kolben (18) durchgeführte Gewindebohrung (21) in der längsgerichteten Aussparung (19) passt.

10. Pedal nach Anspruch 9, **dadurch gekennzeichnet, dass** der Kugelkopf (16) an seinem freien Ende einen Schraubenkopf (22) besitzt, der durch eine Öffnung (23) im unteren Ende der Klaue (14) passt und auf deren Rückseite austritt.

11. Pedal nach einem der Ansprüche 9 oder 10, **dadurch gekennzeichnet, dass** der Kugelkopf (16) in einer konkaven Vertiefung (24) anliegt, derer Radius mit dem Radius des Kugelkopfs (16) übereinstimmt.

12. Pedal nach Anspruch 2, **dadurch gekennzeichnet, dass** es Mittel zum Verstellen der Distanz b zwischen der Pedalachse (4) und der Aufstützachse (7) für den Schuh (8) auf dem Pedal während der gesamten Drehbewegung des Pedals beim Treten besitzt.

13. Pedal nach Anspruch 12, **dadurch gekennzeichnet, dass** es eine Pleuelstange (49) besitzt, deren erstes Ende frei um den Exzenter (50) eines fest mit dem freien Ende des Tretkurbelarms (41) verbundenen Seitenteils (3) drehbar angebracht ist, und deren anderes Ende eine Querachse (52) besitzt, an der frei drehbar das Vorderteil der beweglichen Platte (25) des Pedals befestigt ist, die in Längsrichtung auf der Oberseite der Grundplatte (2) verschiebbar ist, wobei das Hinterteil der Grundplatte (2) des Pedals frei um die Achse am Ende des Tretkurbelarms (41) drehbar befestigt ist.

14. Pedal nach einem der Ansprüche 1 bis 11, **dadurch gekennzeichnet, dass** es einen Treibriemen (43) besitzt, der den Tretkurbelarm entlang zwischen einer Antriebsscheibe (44), die fest mit dem Tretlagergehäuse verbunden ist, und einer angetriebenen Scheibe (45) verläuft, die fest mit dem Seitenteil (3) des Pedals verbunden ist, so dass eine Drehung des Tretkurbelarms (41) eine Drehung der Grundplatte (2) des Pedals um die Pedalachse (4) bewirkt.

15. Pedal nach Anspruch 14, **dadurch gekennzeichnet, dass** die angetriebenen Scheibe (45) durch elastische Mittel (46) fest mit dem Tretlagergehäuse (3) verbunden ist.

16. Pedal nach Anspruch 15, **dadurch gekennzeichnet, dass** die angetriebenen Scheibe (45) durch eine Spiralfeder (46) im Inneren einer in der angetriebenen Scheibe (45) angebrachten kreisförmigen Aussparung (47) fest mit dem Tretlagergehäuse (3) verbunden ist, so dass die Achse der Feder achsgleich zur Drehachse der angetriebenen Scheibe (45) verläuft, wobei die Enden der Spiralfeder (46) einerseits mit der angetriebenen Scheibe (45) und andererseits mit dem Seitenteil (3) des Pedals fest verbunden ist.

17. Pedal nach Anspruch 16, **dadurch gekennzeichnet, dass** es ein Schutzgehäuse (48) besitzt, das auf den Tretkurbelarm (41) aufgesetzt werden kann, um den Treibriemen (43), die Treibscheibe (44) und die angetriebene Scheibe (45) abzudecken.
